# EUROPEAN PATENT APPLICATION

(11) **EP 4 687 183 A1**
(43) Date of publication of application: **04.02.2026**
(21) Application number: 25188674.3
(22) Date of filing: 10.07.2025
(51) Int. Cl.: H01M 4/505, H01M 4/525, H01M 4/58, H01M 10/0525, H01M 50/204, H01M 50/247, H01M 4/02

(54) **BATTERY PACK**

(30) Priority: 02.08.2024 CN 202411060700; 15.05.2025 CN 202510630435
(71) Applicant: Nanjing Chervon Industry Co., Ltd., Nanjing, Jiangsu 211106 (CN)
(72) Inventor: DONG, Zhijun, Nanjing (CN); HUANG, He, Nanjing (CN)
(74) Representative: Sun, Yiming

(57) **Abstract**

A battery pack for powering a power tool includes: a housing including a tool interface detachably coupled to the power tool; a terminal assembly electrically connected to the power tool; and a battery unit including a positive electrode plate, where the positive electrode plate includes a first positive electrode active material and a second positive electrode active material. The first positive electrode active material is lithium iron manganese phosphate. The energy density of the battery pack is greater than or equal to 50 Wh/kg. The capacity loss of the battery pack is less than or equal to 15% after one thousand charge-discharge cycles are performed at room temperature, where each of the charge-discharge cycles is defined as the process in which the battery pack is discharged from a full voltage to a cut-off voltage and is charged from the cut-off voltage to the full voltage.

## Description

### TECHNICAL FIELD

The present application relates to the technical field of power tools, for example, a battery pack for powering a power tool, a power tool, and a power tool system.

### BACKGROUND

Thanks to the development of related technologies, after progressing through the stages in which power tools are powered manually, powered through fuel, and powered through alternating currents, the entire field of power tools shows a trend toward lithium electrification. Various types of power tools, including handheld power tools, table tools, and outdoor power equipment such as mowers, can be powered through lithium batteries. The charge and discharge of a lithium battery are implemented through the deintercalation and intercalation of lithium ions in lattices. Specifically, when the lithium battery is charged, the lithium ions are deintercalated from the lattices of a positive electrode material, pass through an electrolyte and a separator, and are intercalated into the lattices of a negative electrode material. At the same time, electrons also reach a negative electrode from an external circuit. On the contrary, when the lithium battery is discharged, the lithium ions are deintercalated from the lattices of the negative electrode material, pass through the electrolyte and the separator, and are intercalated into the lattices of the positive electrode material, and the electrons leave the negative electrode from the external circuit. The performance of the lithium battery in all aspects is significantly influenced by the positive and negative electrode materials, especially the positive electrode material.

This part provides background information related to the present application, and the background information is not necessarily the existing art.

### SUMMARY

An object of the present application is to solve or at least alleviate part or all of the preceding problems. To this end, the present application provides a battery pack for powering a power tool, a power tool, and a power tool system.

To achieve the preceding object, the present application adopts the technical solutions below.

A battery unit for powering a power tool includes: a negative electrode plate; a positive electrode plate including a first positive electrode active material and a second positive electrode active material, where the first positive electrode active material is lithium iron manganese phosphate; and a separator disposed between the positive electrode plate and the negative electrode plate. The battery unit further includes an electrode member disposed along a side edge of the positive electrode plate, and the length of the electrode member is greater than or equal to one third of the length of the edge.

In some examples, the battery unit is a pouch cell.

In some examples, the battery unit is a cylindrical cell.

In some examples, the rated capacity of the battery unit is greater than or equal to 1.5 Ah.

In some examples, the rated capacity of the battery unit is greater than or equal to 2 Ah and less than or equal to 200 Ah.

In some examples, the nominal voltage of the battery unit is greater than or equal to 3.5 V and less than or equal to 4.5 V.

In some examples, the potential of the second positive electrode active material is higher than the potential of the first positive electrode active material.

In some examples, the second positive electrode active material includes at least one of a lithium nickel cobalt aluminum oxide (NCA) material, a lithium nickel manganese cobalt oxide (NCM) material, a lithium nickel cobalt manganese aluminum oxide (NCMA) material, and a lithium manganese oxide (LMO) material.

In some examples, one or more battery units are electrically connected to form a battery pack, and the battery pack is configured to power at least the power tool.

In some examples, the first positive electrode active material includes a nanometer lithium iron manganese phosphate particle, and the first positive electrode active material and the second positive electrode active material are stirred and mixed and used for manufacturing the positive electrode plate.

A battery pack for powering a power tool includes: a housing including a tool interface, where the tool interface is configured to be detachably coupled to the power tool; a terminal assembly configured to be electrically connected to a terminal assembly of the power tool; and a battery unit including a positive electrode plate, where the positive electrode plate includes a first positive electrode active material and a second positive electrode active material. The first positive electrode active material is lithium iron manganese phosphate. The energy density of the battery pack is greater than or equal to 50 Wh/kg. The capacity loss of the battery pack is less than or equal to 15% after one thousand charge-discharge cycles are performed at room temperature, where each of the charge-discharge cycles is defined as the process in which the battery pack is discharged from a full voltage to a cut-off voltage and is charged from the cut-off voltage to the full voltage.

In some examples, the potential of the second positive electrode active material is higher than the potential of the first positive electrode active material.

In some examples, the second positive electrode active material includes at least one of an NCA material, an NCM material, an NCMA material, and an LMO material.

In some examples, a charge rate of the battery pack is less than or equal to 3 C during one of the charge-discharge cycles, and a discharge rate of the battery pack is less than or equal to 10 C during the one of the charge-discharge cycles.

In some examples, an average charge current of the battery pack is less than or equal to 60 A during one of the charge-discharge cycles, and an average discharge current of the battery pack is less than or equal to 120 A during the one of the charge-discharge cycles.

In some examples, the thickness of the housing is less than or equal to 2 mm.

In some examples, the distance between two battery units in the battery pack is less than or equal to 1 mm.

In some examples, the battery unit is a pouch cell or a cylindrical cell.

In some examples, the rated capacity of the battery pack is greater than or equal to 1.5 Ah.

In some examples, the rated capacity of the battery pack is greater than or equal to 2 Ah and less than or equal to 200 Ah.

In some examples, the nominal voltage of the battery pack is greater than or equal to 10.8 V and less than or equal to 120 V.

In some examples, the volume of the battery pack is less than or equal to 100 L.

In some examples, no independent overcharge protection hardware is disposed in the battery pack.

In some examples, no thermal insulation material is disposed in the battery pack.

A power tool includes: a housing including a battery pack receiving portion; a terminal assembly including a positive terminal, a negative terminal, and a communication terminal, disposed at the battery pack receiving portion, and configured to be electrically connected to a first battery pack and/or a second battery pack, where the first battery pack includes a first battery unit, the first battery unit includes a first positive electrode plate, the second battery pack includes a second battery unit, and the second battery unit includes a second positive electrode plate; and a controller configured to control the power tool. The first positive electrode plate includes at least two types of positive electrode active materials. The second positive electrode plate includes only one type of positive electrode active material. The controller acquires communication data through the communication terminal to identify that the first battery pack or the second battery pack is electrically connected to the terminal assembly and switch a temperature control strategy based on an identification result.

In some examples, the temperature control strategy includes an over-temperature protection threshold and an over-temperature duration.

In some examples, the first positive electrode plate includes a first positive electrode active material and a second positive electrode active material, and the first positive electrode active material is lithium iron manganese phosphate.

In some examples, the potential of the second positive electrode active material is higher than the potential of the first positive electrode active material.

In some examples, the second positive electrode active material includes at least one of an NCA material, an NCM material, an NCMA material, and an LMO material.

In some examples, the second positive electrode plate includes only the second positive electrode active material.

In some examples, an over-temperature protection threshold in a temperature control strategy adopted by the controller when identifying that the terminal assembly is electrically connected to the first battery pack is greater than an over-temperature protection threshold in a temperature control strategy adopted by the controller when identifying that the terminal assembly is electrically connected to the second battery pack.

In some examples, an over-temperature duration in the temperature control strategy adopted by the controller when identifying that the terminal assembly is electrically connected to the first battery pack is longer than an over-temperature duration in the temperature control strategy adopted by the controller when identifying that the terminal assembly is electrically connected to the second battery pack.

A power tool system includes: a power tool, which includes a housing including a battery pack receiving portion, a terminal assembly disposed at the battery pack receiving portion, and a controller configured to control the power tool; a first battery pack, which includes a first housing including a first tool interface, where the first tool interface is configured to be detachably coupled to the battery pack receiving portion, a first terminal assembly configured to be electrically connected to the terminal assembly of the power tool, and a first battery unit including a first positive electrode plate, where the first positive electrode plate includes a first positive electrode active material and a second positive electrode active material; and a second battery pack, which includes a second housing including a second tool interface, where the second tool interface is configured to be detachably coupled to the battery pack receiving portion, a second terminal assembly configured to be electrically connected to the terminal assembly of the power tool, and a second battery unit including a second positive electrode plate. The first positive electrode active material is a lithium iron manganese phosphate material, and the potential of the second positive electrode active material is higher than the potential of the first positive electrode active material.

In some examples, the second positive electrode plate includes only the second positive electrode active material.

In some examples, the second positive electrode plate includes only a lithium iron manganese phosphate material.

In some examples, the first tool interface is the same as the second tool interface.

A lithium iron manganese phosphate composite positive electrode material includes a first positive electrode active material and a second positive electrode active material. The first positive electrode active material includes a nanometer lithium iron manganese phosphate particle, the potential of the second positive electrode active material is higher than the potential of the first positive electrode active material, and the proportion of the first positive electrode active material is greater than or equal to 20% and less than or equal to 80%.

In some examples, the second positive electrode active material is at least one of an NCA material, an NCM material, an NCMA material, and an LMO material.

In some examples, the ratio of manganese to iron in the nanometer lithium iron manganese phosphate particle of the first positive electrode active material is greater than or equal to 3:7 and less than or equal to 7:3.

In some examples, the first positive electrode active material and the second positive electrode active material are stirred and mixed to implement the lithium iron manganese phosphate composite positive electrode material.

In some examples, the lithium iron manganese phosphate positive electrode material is used for manufacturing the positive electrode plate of a battery unit in a battery pack for a power tool.

In some examples, the potential of the first positive electrode active material is greater than or equal to 3.5 V and less than or equal to 4.2 V, and the potential of the second positive electrode active material is greater than or equal to 3.6 V and less than or equal to 4.5 V.

In some examples, the potential of the lithium iron manganese phosphate composite positive electrode material is greater than or equal to 3.5 V and less than or equal to 4.5 V.

### BRIEF DESCRIPTION OF DRAWINGS

FIG. 1 is a schematic view showing scenarios of related power tools and a battery pack for powering a power tool according to an example of the present application.
FIG. 2 is a perspective view of a power tool and a battery pack for powering the power tool according to an example of the present application.
FIG. 3 is a perspective view of a power tool system according to an example of the present application.
FIG. 4 is a perspective view of a battery pack according to an example of the present application.
FIG. 5 is an exploded view showing the housing, tool interface, terminal assembly, and battery units of the battery pack shown in FIG. 4.
FIG. 6 is a perspective view showing some structures of a battery pack according to another example of the present application.
FIG. 7 is a schematic diagram of the electrical control of a power tool system according to an example of the present application.
FIG. 8 is a schematic diagram of the electrical control of a power tool according to an example of the present application.
FIG. 9 is a structural view of a battery unit for powering a power tool according to an example of the present application.
FIG. 10 is a structural view of an electrode member of a battery unit in the related art according to an example of the present application.
FIG. 11 is a structural view of an electrode member in the battery unit shown in FIG. 9.
FIG. 12A is a schematic diagram showing the specific capacities of a lithium iron manganese phosphate material at different ratios of manganese to iron for manufacturing a positive electrode plate of a battery unit along with the number of charge-discharge cycles according to an example of the present application.
FIG. 12B is a schematic diagram showing charge curves and discharge curves of a lithium iron manganese phosphate material at different ratios of manganese to iron for manufacturing a positive electrode plate of a battery unit according to an example of the present application.
FIG. 13A is a schematic diagram showing the capacity losses of battery packs with positive electrode plates of battery units made of a composite positive electrode material and a single positive electrode material along with the number of charge-discharge cycles according to an example of the present application.
FIG. 13B is a schematic diagram showing the discharge curves of battery packs with positive electrode plates of battery units made of a composite positive electrode material and a single positive electrode material at 25°C and 5 C according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Thanks to the development of related technologies, the promotion of environmental protection concepts, and policy support, the scale of the power tool industry continuously expands. Moreover, after progressing through the stages in which power tools are powered manually, powered through fuel, and powered through alternating currents, the entire field shows a development trend toward lithium electrification and intelligence. Various types of power tools, including handheld power tools, table tools, and outdoor power equipment such as mowers and snow throwers, can be powered through lithium batteries at present.

A lithium battery is an ideal reversible battery. A charge process of the lithium battery and a discharge process of the lithium battery are implemented through the deintercalation and intercalation of lithium ions in the lattices of positive and negative electrode materials. Specifically, when the lithium battery is charged, the lithium ions are deintercalated from the lattices of the positive electrode material of the battery, pass through the electrolyte and the separator between the positive electrode plate and the negative electrode plate, and are intercalated into the lattices of the negative electrode material of the battery. At the same time, electrons also reach the negative electrode from an external circuit. On the contrary, when the lithium battery is discharged, the lithium ions are deintercalated from the lattices of the negative electrode material, pass through the electrolyte and the separator, and are intercalated into the lattices of the positive electrode material, and the electrons leave the negative electrode from the external circuit.

A carbon material such as graphite is generally used as the negative electrode material of the lithium battery. In some cases, a non-carbon material may be used as the negative electrode material of the lithium battery. Various materials may be selected as the positive electrode material. Typically, the positive and negative electrode materials further include an adhesive, a conductive agent, and the like. After mixture, the positive electrode material and the negative electrode material may be coated on an aluminum foil and a copper foil, respectively and are manufactured into the positive electrode plate and the negative electrode plate through processes such as drying and rolling. The positive electrode plate, the separator, and the negative electrode plate are wound or folded so that a single cell can be formed. The performance of the lithium battery in all aspects is significantly influenced by the positive and negative electrode materials thereof, especially the positive electrode material. Of course, only related principles of the lithium battery are simply described above, and more complex technologies are actually involved.

At present, a positive electrode material of a lithium battery for a power tool is mainly a "ternary lithium" material, that is, an NCM (lithium nickel manganese cobalt oxide) material or an NCA (lithium nickel cobalt aluminum oxide) material. The NCM material and the NCA material are multi-element polymers such as nickel, cobalt, and manganese. One advantage of the ternary polymer lithium battery is that the lithium battery with the positive electrode plate made of this material generally has a relatively high energy density and can store more energy with the same volume/weight. However, the ternary polymer lithium battery has some significant disadvantages. The ternary polymer lithium battery has relatively poor safety and environmental friendliness and has a relatively short service life. Therefore, the present application improves the positive electrode material of a lithium battery for a power tool to adapt to the requirements of the power tool industry. Reference may be made to the following description.

Firstly, a lithium iron manganese phosphate composite positive electrode material is introduced. The positive electrode material includes at least a first positive electrode active material and a second positive electrode active material. The first positive electrode active material includes a nanometer lithium iron manganese phosphate particle, and the second positive electrode active material is a material with a higher potential than the first positive electrode active material. The proportion of the first positive electrode active material in the preceding composite positive electrode material is greater than or equal to 20% and less than or equal to 80%. The level of the potential of a positive electrode active material represents the ability of the material to provide a potential, which is positively correlated with the free enthalpy with which a lithium ion in the material performs an exchange reaction. In some examples, the potential of the positive electrode active material may be the potential of the material relative to lithium metal. In some examples, the potential of the positive electrode active material may be the full voltage or charge termination voltage of a single cell with a positive electrode plate made of this material only. In some examples, the potential of the preceding first positive electrode active material is greater than or equal to 3.5 V and less than or equal to 4.2 V, and the potential of the preceding second positive electrode active material is greater than or equal to 3.6 V and less than or equal to 4.5 V. In some examples, the potential of the preceding composite positive electrode material is greater than or equal to 3.5 V and less than or equal to 4.5 V. In some cases, in the field of lithium batteries, a cell material system is classified by using a positive electrode active material, and the preceding second positive electrode active material belongs to a "high"-potential material system.

In some examples, the preceding second positive electrode active material may be the lithium nickel manganese cobalt oxide (NCM) material or the lithium nickel cobalt aluminum oxide (NCA) material, that is, a ternary material. In some examples, the preceding second positive electrode active material may be a lithium nickel cobalt manganese aluminum oxide (NCMA) material, that is, a quaternary material. In some examples, the preceding second positive electrode active material may be a unitary material such as a lithium manganese oxide (LMO) material. In some examples, the second positive electrode active material may be mixed with multiple positive electrode active materials having a higher potential than the first positive electrode active material, for example, multiple positive electrode active materials from the NCA material, the NCM material, the NCMA material, and the LMO material mentioned above.

In the preceding example, the first positive electrode active material, that is, a lithium iron manganese phosphate material, has the advantages of high safety, a long service life, and the absence of heavy metals but has a relatively low energy density. However, the positive electrode active material having a higher potential than the lithium iron manganese phosphate material, that is, the second positive electrode active material, has the characteristics of a high energy density and low safety/a short service life. In the composite positive electrode material, two positive electrode active materials are mixed. A high energy density and high safety/a long service life are both considered, and the ratio of the first positive electrode active material to the second positive electrode active material is adjusted so that the performance balance meeting the requirements of the lithium battery for a power tool is comprehensively achieved.

In some examples, the proportion of the first positive electrode active material in the preceding composite positive electrode material is greater than or equal to 20% and less than or equal to 80%. Alternatively, the ratio of the proportion of the first positive electrode active material to the proportion of the second positive electrode active material in the preceding composite positive electrode material is greater than or equal to 2:8 and less than or equal to 8:2. Preferably, the proportion of the first positive electrode active material in the preceding composite positive electrode material is greater than or equal to 40% and less than or equal to 80%. Alternatively, the ratio of the proportion of the first positive electrode active material to the proportion of the second positive electrode active material in the preceding composite positive electrode material is greater than or equal to 4:6 and less than or equal to 8:2. Furthermore, the proportion of the first positive electrode active material in the preceding composite positive electrode material is greater than or equal to 40% and less than or equal to 60%. Alternatively, the ratio of the proportion of the first positive electrode active material to the proportion of the second positive electrode active material in the preceding composite positive electrode material is greater than or equal to 4:6 and less than or equal to 6:4.

In some examples, the preceding first positive electrode active material and the preceding second positive electrode active material are stirred and mixed to implement the lithium iron manganese phosphate composite positive electrode material. In some examples, a monocrystalline ternary material and a nanoscale lithium iron manganese phosphate material may be mixed by using a conventional stirring process, and the nanometer lithium iron manganese phosphate particle is filled between ternary material particles. In some examples, the monocrystalline ternary material, the nanoscale lithium iron manganese phosphate material, and a lithium manganese oxide material may be mixed by using the conventional stirring process. A ternary material particle with a medium particle size may be filled between lithium manganese oxide particles with a large particle size, and the nanometer lithium iron manganese phosphate particle with a small particle size may be filled between ternary material particles with the medium particle size. Thus, the volumetric energy density and the compacted density of the composite positive electrode material can be improved in a simple and feasible manner.

Regarding the first positive electrode active material, that is, the lithium iron manganese phosphate material, it is to be further noted that a lithium iron phosphate (LFP) material is a material with relatively stable electrochemical performance. In some battery packs for power tools, a single LFP material is used for manufacturing the positive electrode plate of a battery unit. The present application aims to meet relatively high power requirements of most power tools. Considering that lithium manganese phosphate and lithium iron phosphate have similar olivine crystal structures, a solid solution with a relatively wide proportion range can be easily implemented. Therefore, Mn-doping optimization is performed on the basis of the LFP material so that the synergistic effect of Mn and Fe is exerted and the lithium iron manganese phosphate (LMFP) material with high stability and a high energy density is obtained.

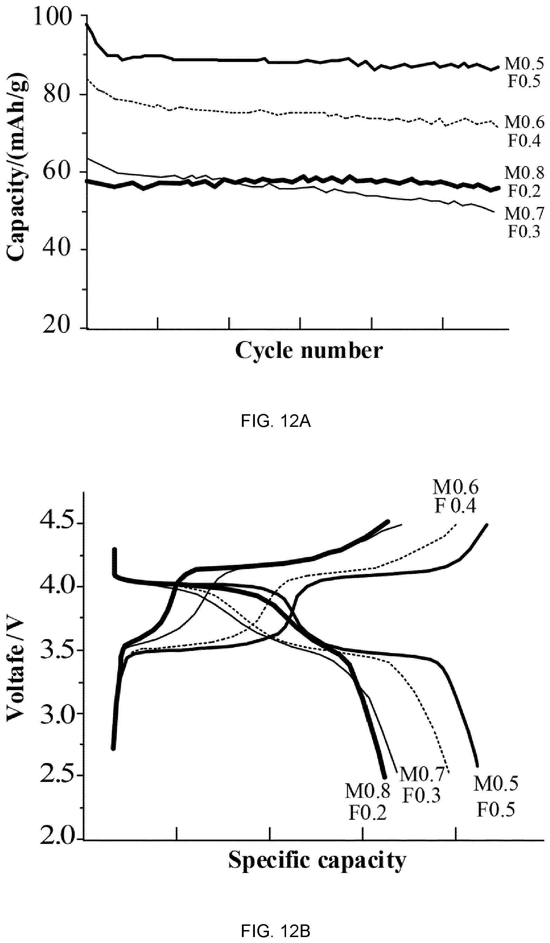

Specifically, if the content of Mn in the LMFP material is excessively low, the potential of the material is increased slightly, and the energy density of the material cannot be significantly improved. If the content of Mn in the LMFP material is excessively high, the Jahn-Teller effect is easily caused, resulting in lattice distortion of the material, and Mn may precipitate and react with the electrolyte, thereby influencing the stability of the material. In addition, another factor has a restriction and a requirement on the ratio of Mn to Fe in the LMFP material. Referring to FIG. 12A and FIG. 12B, when the LMFP material is used for manufacturing the positive electrode plate of the battery unit, a discharge curve of a cell presents the characteristic of having a smooth voltage plateau. The smooth voltage plateau influences the identification of the state of charge (SOC)/the remaining electric quantity of the cell and interferes with the related control. Therefore, an appropriate ratio of Mn to Fe is required to keep the preceding influence within a controllable range. In some examples, the ratio of manganese to iron in the LMFP material is greater than or equal to 3:7 and less than or equal to 7:3. Preferably, the ratio of manganese to iron in the LMFP material is greater than or equal to 5:5 and less than or equal to 6:4. In a preferred example, the ratio of manganese to iron in the LMFP material is 6:4.

To clarify the concept in the solution of the present application, referring to Table 1, the energy densities, cycle lives, high-temperature performance, and low-temperature performance of the LFP material, the LMFP material, and the ternary material are described and compared. Although the values in Table 1 are only used for illustration, the values of the parameters of the materials have well-defined magnitude relations.

**Table 1**

| | LFP | LMFP | NCM |
|---|---|---|---|
| Lattice structure | Olivine structure | Olivine structure | Layered structure |
| Theoretical specific capacity (mAh/g) | 170 | 170 | 270-278 |
| Theoretical energy density (Wh/kg) | 578 | 697 | About 1000 |
| Cycle life (times) | 2000-6000 | 2000-3000 | 800-2000 |
| Lithium ion diffusivity (cm²/s) | 10⁻¹⁴ | 10⁻¹⁵ | 10⁻⁹ |
| Conductivity (S/cm) | 10⁻⁹ | 10⁻¹³ | 10⁻³ |
| High-temperature performance | Poor | Better than that of the LFP | Good |
| Low-temperature performance | Good | Better than that of the NCM | Becoming poor with the increase |
| | | | of Ni |

In the preceding example, for mixing the second positive electrode active material with the first positive electrode active material, the energy density advantage of the second positive electrode active material is utilized, and the problems of poor safety and stability of the second positive electrode active material are solved through the first positive electrode active material, and the service life of the mixed material is prolonged. For mixing the first positive electrode active material with the second positive electrode active material, the safety and service life advantages of the first positive electrode active material are utilized, and the energy density, lithium ion diffusivity, conductivity, compacted density, low-temperature performance, and the like of the mixed material are improved through the second positive electrode active material.

Following on from the preceding description, the present application is an improvement solution of a positive electrode material proposed for a battery pack for a lithium electrification power tool. However, the preceding lithium iron manganese phosphate composite positive electrode material is certainly also applicable to a battery unit or a battery pack for another purpose, which is a positive electrode material with excellent comprehensive performance and may also produce an improvement effect in other scenarios. Hereinafter, the present application mainly describes the scenarios of a power tool 200 and a battery unit 10 and a battery pack 100 for powering the power tool 200. The battery unit 10 and the battery pack 100 for the power tool 200 using the preceding lithium iron manganese phosphate composite positive electrode material and the power tool 200 are further described.

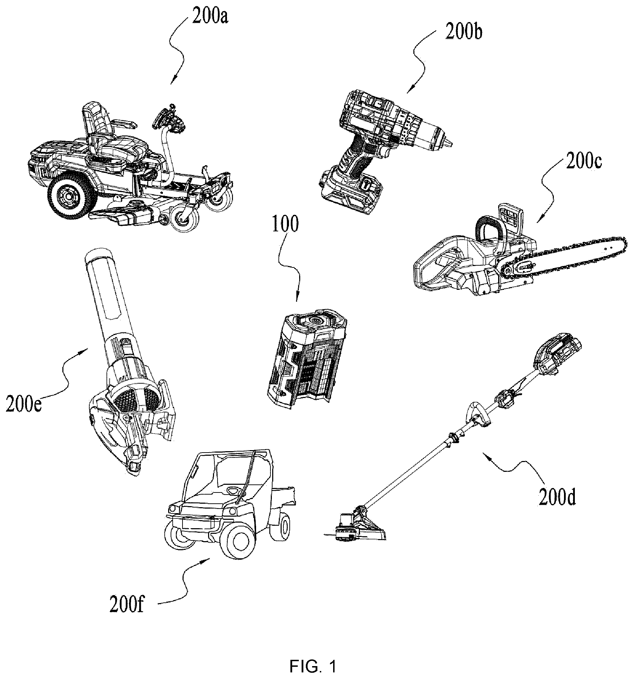

Referring to FIG. 1, the power tool 200 described in the present application may include various types of power tools 200, for example, a riding mower 200a, an electric drill 200b, a chainsaw 200c, a string trimmer 200d, a blower 200e, and an all-terrain vehicle 200f shown in FIG. 1. The battery unit 10 and the battery pack 100 described below can power the power tool 200. In some examples, the preceding power tool 200 may be a handheld tool such as a circular saw, a reciprocating saw, an electric drill, or a screwdriver. In some examples, the power tool 200 may be a table tool such as a table saw or a miter saw. In some examples, the power tool 200 may be outdoor power equipment such as a mower or a snow thrower. In some examples, the power tool 200 may be a robotic tool such as a robotic mower or a robotic snow thrower. In some examples, the power tool 200 may be a push tool such as a push mower or a push snow thrower. In some examples, the preceding power tool 200 may be a vehicle device such as a utility task vehicle (UTV)/a farmer's vehicle, an all-terrain vehicle (ATV)/a dune buggy, and a golf cart. In some examples, the power tool 200 may be an outdoor wheeled tool, an outdoor electric vehicle, or the like. In some examples, the preceding power tool 200 may be a decoration tool such as an angle grinder or an impact wrench, which is used in scenarios such as construction projects. In some examples, the power tool 200 may be a garden tool such as a pruner or a string trimmer, which is used in a gardening scenario. In some examples, the power tool 200 may be a cleaning tool, for example, a blower or a cleaning machine. In some examples, the preceding power tool 200 may be a cutting tool such as a chainsaw or a jigsaw. In some examples, the power tool 200 may be a drilling tool such as an electric drill, an electric hammer, or a screwdriver. In some examples, the power tool 200 may be a sanding tool such as an angle grinder or a sander. Alternatively, the power tool 200 may be another tool, for example, a lamp or a fan. It is to be understood that some electrical devices not shown in the preceding description may also be included in the scope of the power tool 200 described in the present application.

The preceding power tool 200 is powered by the battery pack 100 and has a battery pack receiving portion 211, where the battery pack 100 is mounted to or detached from the battery pack receiving portion 211. The specific structures and positions of battery pack receiving portions 211 of different power tools 200 may be different. The battery pack receiving portion 211 is generally disposed on a housing 210 of the power tool 200 and may be closed, semi-closed, or exposed.

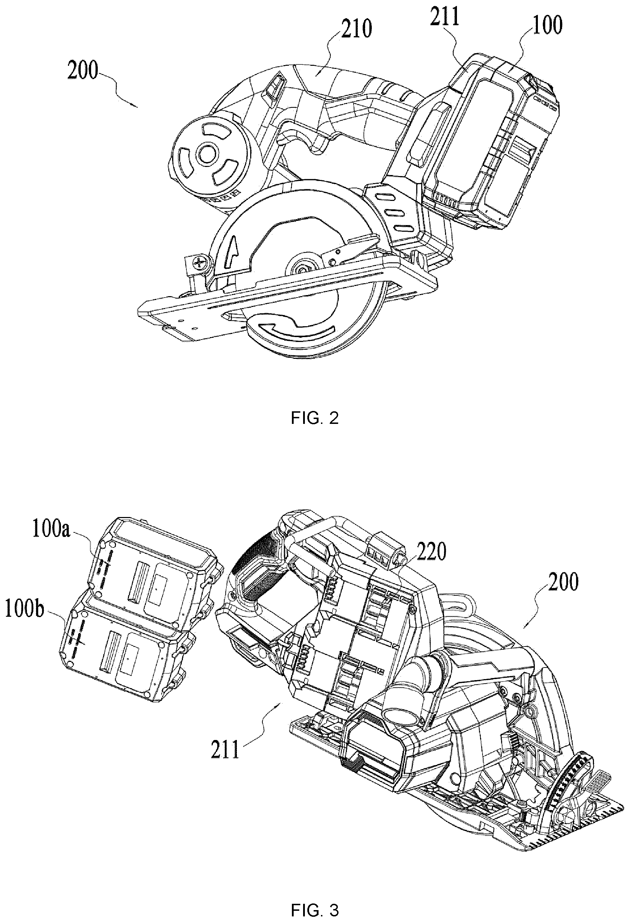

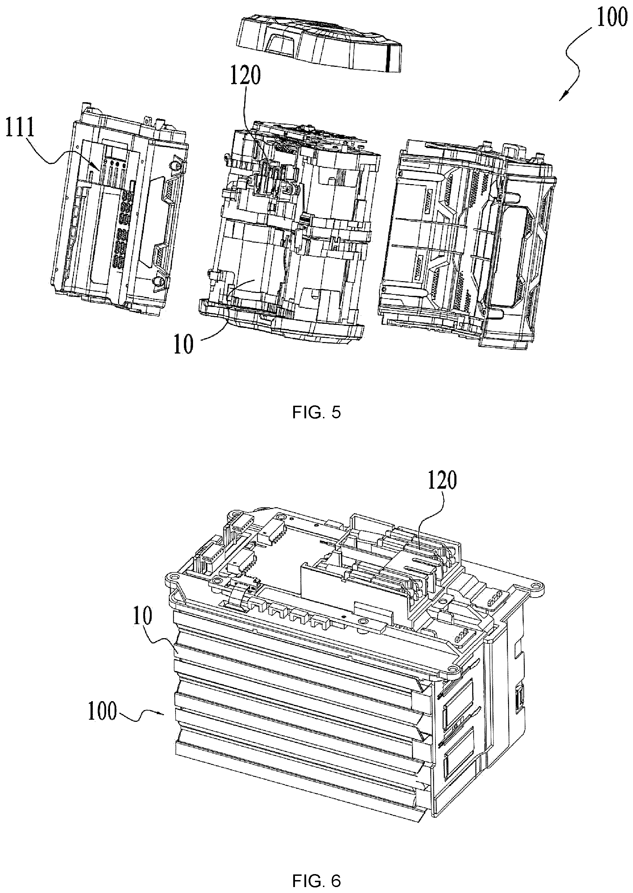

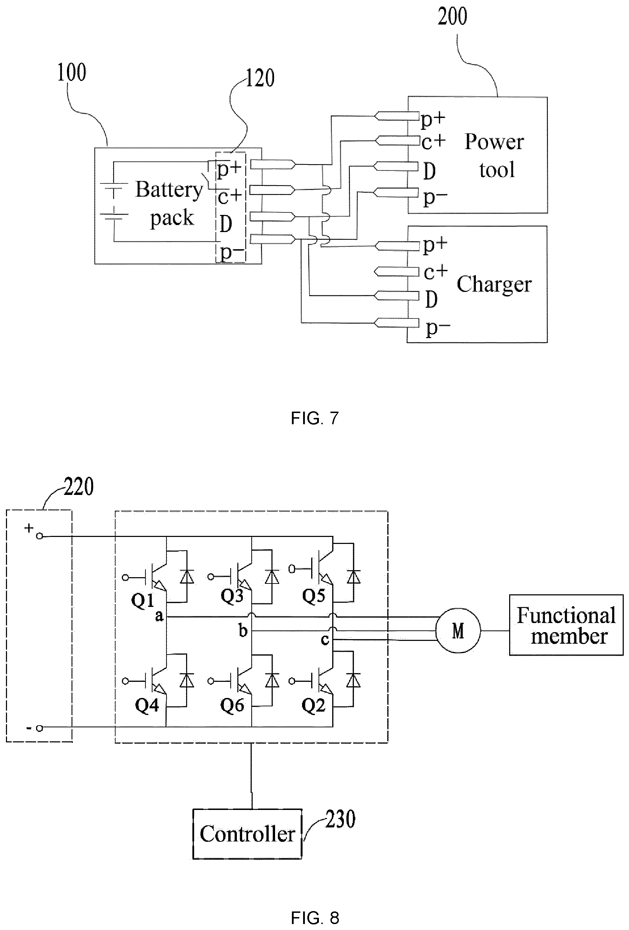

Referring to FIGS. 2 to 8, the power tool 200 further includes a terminal assembly 220 disposed at the battery pack receiving portion 211 and a controller 230 disposed in the housing 210 in addition to the housing 210 and the battery pack receiving portion 211 disposed on the housing 210. The terminal assembly 220 of the power tool 200 is connectable to a terminal assembly 120 of the battery pack 100 through a male interface and a female interface or the like. Each of the terminal assembly of the power tool 200 and the terminal assembly of the battery pack 100 can include a positive terminal and a negative terminal for transmitting electrical energy and a communication terminal for transmitting communication data. The controller 230 can run related control programs to control performing of various functions and tasks of the power tool 200. It is relatively common that the power tool 200 generally further includes a functional member that performs actual work, such as a blade, a grinding disc, or a drill bit. In some examples, a transmission component such as a gear and a shaft is further included. In some examples, an electric motor for driving the preceding functional member or other components and assemblies is further included.

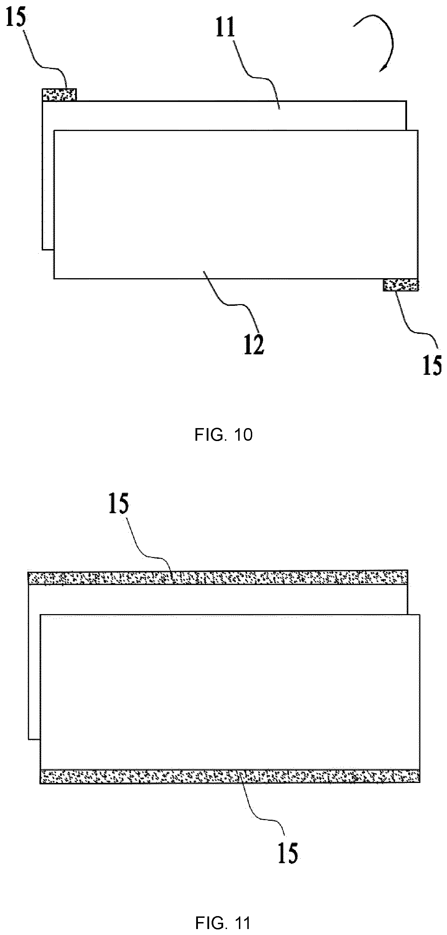

Referring to FIGS. 2 to 11, the present application provides the battery unit 10 for powering the preceding power tool 200. The battery unit 10 may be a core component of the battery pack 100. In some examples, the battery unit 10 is a single cell. One or more single cells are electrically connected in series and/or in parallel such that the battery pack 100 for powering the power tool 200 can be formed.

The preceding battery unit 10 includes a positive electrode plate 11, a negative electrode plate 12, and a separator 13. The positive electrode plate 11 is coated with a positive electrode material. The negative electrode plate 12 is coated with a negative electrode material. The separator 13 is disposed between the positive electrode plate 11 and the negative electrode plate 12. In addition, an electrolyte 14 is filled between the positive electrode plate 11 and the negative electrode plate 12, and lithium ions are transferable between the positive electrode material and the negative electrode material through the separator 13 in the electrolyte 14. The battery unit 10 also has a housing 16. In some examples, the positive electrode plate 11, the separator 13, and the negative electrode plate 12 mentioned above are wound into the battery unit 10. The battery unit 10 may be a cylindrical cell or a wound cell. In some examples, the battery unit 10 is a pouch cell. The positive electrode plate 11, the separator 13, and the negative electrode plate 12 mentioned above may be folded into the battery unit 10. In some examples, the battery unit 10 may be a square cell. In some examples, the negative electrode material is a graphite material. In some examples, the electrolyte 14 is one or more of an organic solute, a solid electrolyte, a liquid electrolyte containing a lithium salt, and a polymer electrolyte.

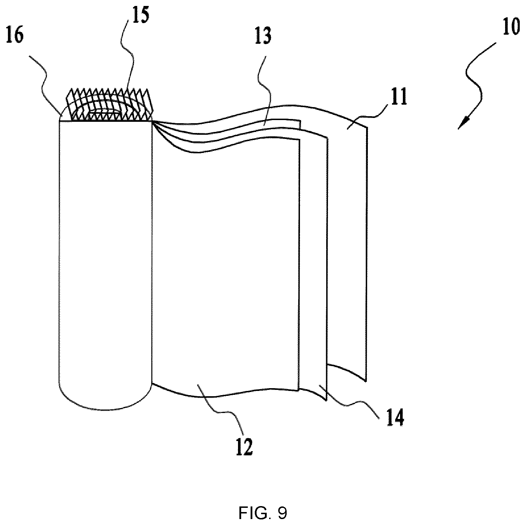

In this example, the preceding positive electrode plate 11 includes the first positive electrode active material and the second positive electrode active material, that is, the composite positive electrode material is applied to the positive electrode plate 11. The first positive electrode active material is the lithium iron manganese phosphate material. In addition, the battery unit 10 further includes an electrode member 15. The electrode member 15 is disposed along a side edge of the positive electrode plate 11, and the length of the electrode member 15 is greater than or equal to one third of the length of the edge. Preferably, the length of the electrode member 15 is greater than or equal to two thirds of the length of the edge of the positive electrode plate 11 on which the electrode member 15 is located. Specifically, the preceding electrode member 15 is configured to lead out a current and is also referred to as a tab in some cases. The positive electrode plate 11 generally has a main rectangular plane, and the electrode member 15 may be disposed on a side edge corresponding to a long side of the rectangular plane of the positive electrode plate 11 so that the current reaches the electrode member 15 along a shorter path. Alternatively, the electrode member 15 may be adaptively disposed on any edge of the positive electrode plate 11. Similarly, the electrode member 15 may be disposed on a side edge of the negative electrode plate 12, and the length of the electrode member 15 is also greater than or equal to one third of the length of the edge of the negative electrode plate 12. As shown in FIG. 9, one or more electrode members 15 may be provided. The one or more electrode members 15 may be continuously disposed within a full length range of one side edge of the positive electrode plate 11. For example, multiple electrode members 15 may be disposed at intervals along a long edge of the positive electrode plate 11. The length of the preceding electrode member 15 is the total length of the electrode member 15 along the edge of the positive electrode plate 11 on which the electrode member 15 is located. In the case where the multiple electrode members 15 are provided, the length of the electrode members 15 is the sum of the lengths of the electrode members 15 along the direction of the edge. In the preceding example, firstly, the positive electrode plate 11 of the battery unit 10 is implemented through the positive electrode material obtained by mixing the first positive electrode active material and the second positive electrode active material. Thus, the original safety and stability advantages of the lithium iron manganese phosphate material are maintained, and the weakness of an insufficient energy density thereof can be minimized. The electrode member 15 has the length exceeding one third of the length of the edge of the positive electrode plate 11 on which the electrode member 15 is located. This configuration can significantly reduce an electrical contact loss from the cell to an external circuit, thereby further optimizing the output performance of the battery unit 10 and compensating for the related deficiencies.

In some examples, the preceding second positive electrode active material is a positive electrode material having a higher potential than the first positive electrode active material, that is, the LMFP material. The battery unit 10 having a high energy density, low safety, and a short service life is obtained when only the second positive electrode active material is used for manufacturing the positive electrode plate 11. In some examples, the preceding second positive electrode active material includes, but is not limited to, the NCA material, the NCM material, the NCMA material, and the LMO material and may be one or more of the NCA material, the NCM material, the NCMA material, and the LMO material. In some examples, the first positive electrode active material is the nanometer lithium iron manganese phosphate particle. The nanometer lithium iron manganese phosphate particle can be mixed and stirred with the second positive electrode active material and used for manufacturing the positive electrode plate 11 of the preceding battery unit 10.

In some examples, the composite positive electrode material constituted by the first positive electrode active material and the second positive electrode active material mentioned above is applied to the positive electrode plate 11. To meet the design requirements for powering the various power tools 200 described above, the battery unit 10 with the positive electrode plate 11 has a rated capacity of greater than or equal to 1.5 Ah. Preferably, the rated capacity of the battery unit 10 is greater than or equal to 2 Ah and less than or equal to 200 Ah. In some examples, the nominal voltage of the preceding battery unit 10 for powering the power tool 200 is greater than or equal to 3.5 V and less than or equal to 4.5 V. Preferably, the nominal voltage of the battery unit 10 is greater than or equal to 3.6 V and less than or equal to 4.5 V. In some examples, a continuous discharge current of the preceding battery unit 10 for powering the power tool 200 is greater than or equal to 1 A and less than or equal to 200 A, where the continuous discharge current is a non-instantaneous current. Alternatively, an average discharge current of the battery unit 10 is preferably greater than or equal to 2 A and less than or equal to 50 A.

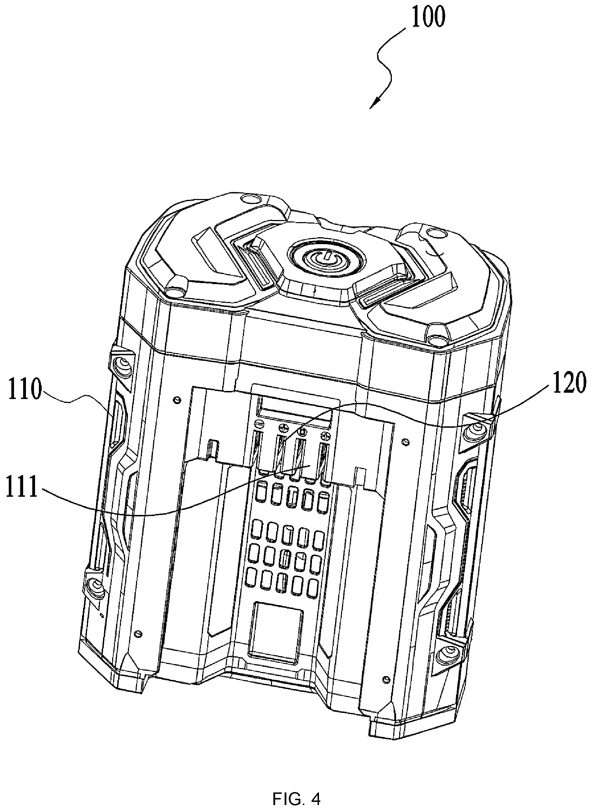

Following on from the preceding description, referring to FIGS. 4 to 6, the present application provides the battery pack 100 for powering the power tool 200. The battery pack 100 may include a housing 110, a tool interface 111 provided on the housing 110, and the terminal assembly 120. The tool interface 111 can mate with and be coupled to the battery pack receiving portion 211 on the housing 210 of the power tool 200 described above to implement detachable connection therebetween. The terminal assembly 120 of the battery pack 100 is configured to be electrically connected to the terminal assembly 220 of the power tool 200 to transmit electrical energy and data therebetween. The battery pack 100 for powering the power tool 200 further includes the battery unit 10. The battery unit 10 may be the cylindrical cell or the pouch cell or the square cell. One or more battery units 10 may be provided, may be connected to one another in series and/or in parallel, and may be accommodated in the housing 110 of the battery pack 100. As described above, the battery unit 10 may include the positive electrode plate 11, the negative electrode plate 12, the separator 13, the electrolyte 14, and the housing 16. In some cases, a full-tab cell further includes the electrode member 15. The positive electrode plate 11 includes the first positive electrode active material and the second positive electrode active material, and the first positive electrode active material is the lithium iron manganese phosphate material. In this example, with the preceding composite positive electrode material, the energy density of the battery pack 100 for powering the power tool 200 is greater than or equal to 50 Wh/kg, and the capacity loss of the battery pack 100 for powering the power tool 200 is less than or equal to 15% after one thousand charge-discharge cycles are performed at room temperature. Optionally, in some examples, the energy density of the battery pack 100 for powering the power tool 200 is greater than or equal to 100 Wh/kg. Preferably, in some examples, the energy density of the battery pack 100 for powering the power tool 200 is greater than or equal to 200 Wh/kg, and the capacity loss of the battery pack 100 for powering the power tool 200 is less than or equal to 10% after one thousand charge-discharge cycles are performed at room temperature. In some examples, the energy density of the battery pack 100 for powering the power tool 200 is greater than or equal to 220 Wh/kg.

A charge-discharge cycle process of the battery pack 100 is performed in a room temperature environment for evaluating the capacity loss of the battery pack 100. The environment generally refers to the condition that room temperature is 23±2°C and relative humidity is 55±20%. The charge-discharge cycle process is defined as follows: the battery pack 100 is discharged from a full voltage to a cut-off voltage and is charged from the cut-off voltage to the full voltage, which forms one charge-discharge cycle. The full voltage of the battery pack 100 is generally specified as the charge termination voltage of the battery pack 100. In this case, the SOC of the battery pack reaches the "maximum value". The cut-off voltage of the battery pack 100 is generally specified as the discharge termination voltage of the battery pack 100. In this case, the SOC of the battery pack may approximate to the "minimum value", that is, the depth of discharge (DoD) reaches 100% in the preceding charge-discharge cycle process. In some examples, in the preceding charge-discharge cycle process, a charge rate of the battery pack 100 may be less than or equal to 3 C, and a discharge rate of the battery pack 100 may be less than or equal to 10 C. That is, the capacity loss of the preceding battery pack 100 for powering the power tool 200 is less than or equal to 15% after the battery pack 100 is charged at 3 C and discharged at 10 C for one thousand charge-discharge cycles, where the battery pack 100 for powering the power tool 200 includes the positive electrode plate 11 to which the composite positive electrode material is applied. In other words, in the scenario where the charge rate is less than 3 C and the discharge rate is greater than 10 C, the battery pack 100 for the power tool 200 can undergo more than one thousand charge-discharge cycles if the capacity loss of the battery pack 100 for the power tool 200 reaches 15%. However, in a common charge and discharge scenario, the capacity loss of the battery pack 100 for the power tool 200 is far less than 15% after one thousand charge-discharge cycles. The battery pack 100 for the power tool 200 can undergo much more than one thousand charge-discharge cycles if the capacity loss reaches 15%.

In some examples, the preceding second positive electrode active material is the positive electrode material having the higher potential than the first positive electrode active material, that is, the LMFP material. The battery unit 10 having the high energy density, the low safety, and the short service life is obtained when only the second positive electrode active material is used for manufacturing the positive electrode plate 11. In some examples, the preceding second positive electrode active material includes, but is not limited to, the NCA material, the NCM material, the NCMA material, and the LMO material and may be one or more of the NCA material, the NCM material, the NCMA material, and the LMO material. In some examples, the first positive electrode active material is the nanometer lithium iron manganese phosphate particle. The nanometer lithium iron manganese phosphate particle can be mixed and stirred with the second positive electrode active material and used for manufacturing the positive electrode plate 11 of the preceding battery unit 10.

In some examples, the composite positive electrode material constituted by the first positive electrode active material and the second positive electrode active material mentioned above is applied to the positive electrode plate 11. To meet the design requirements for powering the various power tools 200 described above, the battery pack 100 with the positive electrode plate 11 has an average charge current of less than or equal to 3 C and an average discharge current of less than or equal to 10 C in the charge-discharge cycle process. Preferably, in the charge-discharge cycle process, the average charge current of the battery pack 100 is less than or equal to 2 C, and the average discharge current of the battery pack 100 is less than or equal to 5 C. In some examples, the rated capacity of the preceding battery pack 100 for powering the power tool 200 is greater than or equal to 1.5 Ah. Preferably, the rated capacity of the battery pack 100 is greater than or equal to 2 Ah and less than or equal to 200 Ah. In some examples, the nominal voltage of the preceding battery pack 100 for powering the power tool 200 is greater than or equal to 10.8 V and less than or equal to 120 V. Preferably, the nominal voltage of the battery pack 100 is greater than or equal to 10.8 V and less than or equal to 80 V. Preferably, the nominal voltage of the battery pack 100 is greater than or equal to 18 V and less than or equal to 56 V.

In some examples, the composite positive electrode material constituted by the first positive electrode active material and the second positive electrode active material mentioned above is applied to the positive electrode plate 11. To meet the design requirements for powering the various power tools 200 described above, the battery pack 100 with the positive electrode plate 11 has a volume of less than or equal to 100 L and/or a weight of less than or equal to 100 kg. The volume of the battery pack 100 may be calculated with the length, width, and height thereof by regarding the battery pack 100 as a rectangular parallelepiped. Optionally, the volume of the battery pack 100 is less than or equal to 40 L. Preferably, the volume of the battery pack 100 is less than or equal to 4.8 L. Preferably, the volume of the battery pack 100 is less than or equal to 1.2 L, and/or the weight of the battery pack 100 is less than or equal to 2.8 kg. In some examples, the thickness of the housing 110 of the preceding battery pack 100 for powering the power tool 200 is less than or equal to 2 mm. The thickness of the housing 110 of the battery pack 100 may be the average thickness or maximum thickness of the housing 110. Preferably, the thickness of the housing 110 of the battery pack 100 is less than or equal to 1.5 mm. In some examples, the distance between two battery units 10 in the battery pack 100 for powering the power tool 200 is less than or equal to 1.5 mm. The distance between the two battery units 10 may be the minimum distance between the housings of the two battery units 10. Preferably, the distance between the two battery units 10 in the battery pack 100 is less than or equal to 1 mm. The preceding examples can further optimize the energy density, structure compactness, and portability of the battery pack 100 for the power tool 200.

In some examples, the composite positive electrode material constituted by the first positive electrode active material and the second positive electrode active material mentioned above is applied to the positive electrode plate 11. The battery pack 100 with the positive electrode plate 11 can effectively utilize the advantages of high safety and high stability of the lithium iron manganese phosphate material. Therefore, no thermal insulation material may be disposed, and/or no independent overcharge protection hardware may be disposed. In the related art, it is relatively common that considering relatively poor safety of a ternary material such as NCM, a thermal insulation material such as flame-retardant foam, a mica plate, and aerogel felt is generally disposed in the battery pack 100 for the power tool 200 to alleviate the phenomena such as thermal runaway and thermal spread. The thermal insulation material is disposed between battery units 10 for thermal insulation and flame retardancy. In addition, to avoid problems such as combustion and explosion caused by overcharge in the battery pack 100 for the power tool 200, a control program is configured to limit the overcharge from the aspect of software, and independent overcharge protection hardware such as an independent overcharge fuse is generally further provided, which forcibly terminate the charge of the battery pack 100 after a voltage exceeds an upper limit. However, in the preceding example, due to the addition of the lithium iron manganese phosphate material in the composite positive electrode material, the probability of thermal runaway and thermal spread of the battery pack 100 is significantly reduced. No thermal insulation material is disposed, and/or no independent overcharge protection hardware is disposed, which is more conducive to optimizing the cost, structure, and performance of the battery pack 100.

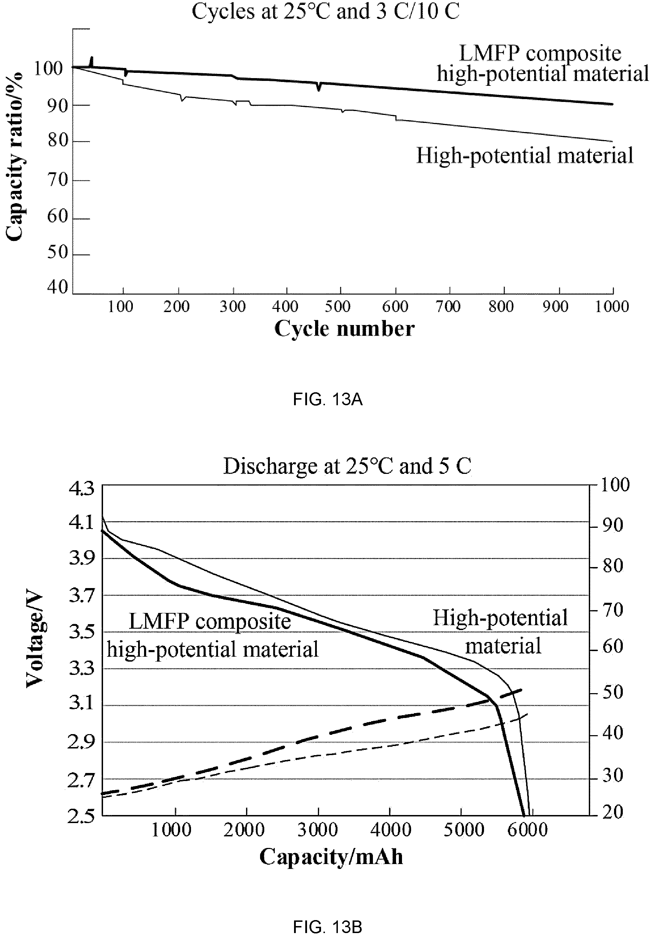

The performance of the examples of the battery unit 10 and the battery pack 100 for powering the power tool 200 described above is further described below. Referring to examples in FIGS. 13A and 13B, in the case where other conditions are the same, the battery pack or the battery unit for the power tool with the positive electrode plate made of the composite positive electrode material including the first positive electrode active material and the second positive electrode active material has a better curve of discharge at a rate than a battery pack or a battery unit with a positive electrode plate made of only the lithium manganese phosphate/lithium iron phosphate/lithium iron manganese phosphate material, and the battery pack or the battery unit for the power tool with the positive electrode plate made of the composite positive electrode material has a better capacity loss curve for one thousand charge-discharge cycles than a battery pack or a battery unit with a positive electrode plate made of a ternary material or a quaternary material. The battery pack or the battery unit with the positive electrode plate made of the composite positive electrode material successfully passed an overcharge test, a hot box test at 150°C (the temperature of the battery pack or the battery unit rises to a test temperature at the rate of +5°C/min, and then the battery pack or the battery unit rests for 30 min), and a nail penetration test (a steel nail of 5mm±1mm is driven into the cell at 20 mm/s), while the battery pack or the battery unit with the positive electrode plate made of the ternary material or the quaternary material was fired in an overcharge test, a hot box test at 140°C, and a nail penetration test.

Following on from the preceding description, in view of the compatibility between the power tool 200 and different battery packs 100, the present application further provides the power tool 200 and a power tool system, as shown in FIGS. 1 to 3. The power tool system includes the power tool 200, a first battery pack 100a, and a second battery pack 100b. The power tool 200 is adapted to the first battery pack 100a and/or the second battery pack 100b so that two types of battery packs with the positive electrode plate 11 manufactured by applying the ternary material and the positive electrode plate 11 manufactured by applying the composite positive electrode material are iterated and both usable.

The preceding power tool 200 may be the various types of power tools 200 described above. The preceding power tool 200 includes the housing 210, the battery pack receiving portion 211 disposed on the housing 210, and the terminal assembly 220 disposed at the battery pack receiving portion 211. The battery pack receiving portion 211 can be coupled to a tool interface of the first battery pack 100a and/or a tool interface of the second battery pack 100b. The terminal assembly 220 of the power tool 200 can also be electrically connected to a terminal assembly 120 of the first battery pack 100a and/or a terminal assembly 120 of the second battery pack 100b. The first battery pack 100a includes a first housing 110 and a first tool interface 111 on the first housing 110 that can be coupled to the battery pack receiving portion 211 on the housing 210 of the power tool 200. The first battery pack 100a further includes a first terminal assembly 120 that can be electrically connected to the terminal assembly 220 of the power tool 200 and includes one or more first battery units 10 accommodated in the first housing 110. Each of the first battery units 10 includes a first positive electrode plate 11, and the first positive electrode plate 11 includes at least two positive electrode active materials. The second battery pack 100b includes a second housing 110 and a second tool interface 111 on the second housing 110 that can be coupled to the battery pack receiving portion 211 on the housing 210 of the power tool 200. The second battery pack 100b further includes a second terminal assembly 120 that can be electrically connected to the terminal assembly 220 of the power tool 200 and includes one or more second battery units 10 accommodated in the second housing 110. Each of the second battery units 10 includes a second positive electrode plate 11, and the second positive electrode plate 11 includes only one positive electrode active material. In some examples, the difference between the first battery pack 100 and the second battery pack 100 may be only in the battery unit 10, and the first battery pack 100 and the second battery pack 100 may have the same or similar appearance and body. In some examples, the power tool 200 is powered by only a single battery pack 100, that is, the power tool 200 is powered by the first battery pack 100a or the second battery pack 100b. In some examples, the power tool 200 may be powered by the first battery pack 100a and the second battery pack 100b at the same time. The battery pack receiving portion 211 of the power tool 200 can be coupled to two battery packs at the same time, and the terminal assembly 220 of the power tool 200 includes terminals that can be connected to the terminal assemblies of the two battery packs.

In this example, the power tool 200 is further provided with the controller 230. The controller 230 can acquire communication data from the battery pack 100 through the communication terminal. Thus, the battery pack 100 currently electrically connected to the terminal assembly 220 of the power tool 200 can be identified, and a corresponding temperature control strategy can be switched based on an identification result so that more accurate battery thermal management is performed. Specifically, in the case where it is identified that the power tool 200 is electrically connected to the first battery pack 100a, the controller 230 of the power tool 200 may perform a first temperature control strategy, and in the case where it is identified that the power tool 200 is electrically connected to the second battery pack 100b, the controller 230 of the power tool 200 may perform a second temperature control strategy. In some examples, the communication data exchanged between the battery pack 100 and the power tool 200 through the preceding terminal assembly 220 carries information such as the version, model, and electrical parameter of the battery pack 100. In some examples, the temperature control strategy to be performed by the controller 230 of the power tool 200 includes an over-temperature protection threshold and an over-temperature duration. The over-temperature protection threshold in the first temperature control strategy and the over-temperature protection threshold in the second temperature control strategy are different, and/or the over-temperature duration in the first temperature control strategy and the over-temperature duration in the second temperature control strategy are different. The temperature protection threshold is compared with a sampled temperature at a temperature measurement point in the battery pack 100 such that it is determined whether the electrically connected battery pack 100 is currently at an over-temperature. The over-temperature duration is used for determining a charge or discharge termination opportunity. For example, the controller 230 may terminate the charge or discharge of the electrically connected battery pack 100 after the sampled temperature exceeds the over-temperature protection threshold and the over-temperature condition persists for the over-temperature duration.

In some examples, the composite positive electrode material including the first positive electrode active material and the second positive electrode active material is applied to the first positive electrode plate 11 of the first battery pack 100a. The first positive electrode active material is the lithium iron manganese phosphate material. In some examples, the second positive electrode active material is a material having a higher potential than the first positive electrode active material. Specifically, the second positive electrode active material includes, but is not limited to, one or more of the NCA material, the NCM material, the NCMA material, and the LMO material.

In some examples, only the preceding first positive electrode active material, that is, only the lithium iron manganese phosphate material may be applied to the second positive electrode plate 11 of the second battery pack 100b. Alternatively, only the preceding second positive electrode active material may be applied to the second positive electrode plate 11, for example, the ternary material such as the NCA material or the NCM material.

In some examples, the LMFP material and the second positive electrode active material with a higher potential than the LMFP material are both applied to the first positive electrode plate 11, and only the second positive electrode active material is applied to the second positive electrode plate 11. In this case, the over-temperature protection threshold in the first temperature control strategy performed by the controller 230 in the case where it is identified that the power tool 200 is currently electrically connected to the first battery pack 100a is greater than the over-temperature protection threshold in the second temperature control strategy performed by the controller 230 in the case where it is identified that the power tool 200 is currently electrically connected to the second battery pack 100b, and/or the over-temperature duration in the first temperature control strategy is longer than the over-temperature duration in the second temperature control strategy. It is to be understood that the temperature control strategy performed by the controller 230 of the power tool 200 may be more complex and variable. However, in general, to adapt to the characteristic difference between the first positive electrode plate 11 and the second positive electrode plate 11 or the characteristic difference between the first battery pack 100a and the second battery pack 100b caused by the first positive electrode active material and the second positive electrode active material, the first temperature control strategy performed by the controller 230 of the power tool 200 when identifying that the power tool 200 is currently electrically connected to the first battery pack 100a can be more tolerant to related abnormalities than the second temperature control strategy performed by the controller 230 of the power tool 200 when identifying that the power tool 200 is currently electrically connected to the second battery pack 100b.

It is to be noted that the various examples described above and the various specific examples thereof may be combined with one another on the premise that the characteristics do not conflict so that the positive electrode plate/the composite positive electrode material of the battery, the battery unit, the battery pack, the power tool, or the power tool system in the present application is comprehensively optimized.

The technical effects of the present application include at least providing the battery unit and the battery pack with better overall performance and the power tool and the power tool system related to the battery unit and the battery pack, where the battery unit and the battery pack balance the energy density with the safety and the stability and meet the requirements for powering the power tools.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack (100) for powering a power tool (200), comprising:
a housing (110) comprising a tool interface (111), wherein the tool interface is configured to be detachably coupled to the power tool;
a terminal assembly (120) configured to be electrically connected to a terminal assembly (220) of the power tool; and
a battery unit (10) comprising a positive electrode plate (11), wherein the positive electrode plate comprises a first positive electrode active material and a second positive electrode active material;
wherein the first positive electrode active material is lithium iron manganese phosphate,
an energy density of the battery pack is greater than or equal to 50 Wh/kg, and a capacity loss of the battery pack is less than or equal to 15% after one thousand charge-discharge cycles are performed at room temperature, wherein each of the charge-discharge cycles is defined as a process in which the battery pack is discharged from a full voltage to a cut-off voltage and is charged from the cut-off voltage to the full voltage.

2. The battery pack according to claim 1, wherein a potential of the second positive electrode active material is higher than a potential of the first positive electrode active material.

3. The battery pack according to claim 2, wherein the second positive electrode active material comprises at least one of a lithium nickel cobalt aluminum oxide (NCA) material, a lithium nickel manganese cobalt oxide (NCM) material, a lithium nickel cobalt manganese aluminum oxide (NCMA) material, and a lithium manganese oxide (LMO) material.

4. The battery pack according to claim 1, wherein a charge rate of the battery pack is less than or equal to 3 C during one of the charge-discharge cycles, and a discharge rate of the battery pack is less than or equal to 10 C during the one of the charge-discharge cycles.

5. The battery pack according to claim 1, wherein an average charge current of the battery pack is less than or equal to 60 A during one of the charge-discharge cycles, and an average discharge current of the battery pack is less than or equal to 120 A during the one of the charge-discharge cycles.

6. The battery pack according to claim 1, wherein a thickness of the housing is less than or equal to 2 mm, and a distance between two battery units in the battery pack is less than or equal to 1 mm.

7. The battery pack according to claim 1, wherein a volume of the battery pack is less than or equal to 100 L.

8. The battery pack according to claim 1, wherein the battery unit is a pouch cell or a cylindrical cell.

9. The battery pack according to claim 1, wherein a rated capacity of the battery pack is greater than or equal to 1.5 Ah, and a nominal voltage of the battery pack is greater than or equal to 10.8 V and less than or equal to 120 V.

10. The battery pack according to claim 1, wherein no independent overcharge protection hardware is disposed in the battery pack, and/or no thermal insulation material is disposed in the battery pack.

11. The battery pack according to claim 1, wherein the battery unit further comprises an electrode member (15) disposed along a side edge of the positive electrode plate, and a length of the electrode member is greater than or equal to one third of a length of the edge.

12. The battery pack according to claim 1, wherein a rated capacity of the battery unit is greater than or equal to 1.5 Ah, and a nominal voltage of the battery unit is greater than or equal to 3.5 V and less than or equal to 4.5 V.

13. The battery pack according to claim 1, wherein the first positive electrode active material comprises a nanometer lithium iron manganese phosphate particle, a potential of the second positive electrode active material is higher than a potential of the first positive electrode active material, and a proportion of the first positive electrode active material is greater than or equal to 20% and less than or equal to 80%.

14. The battery pack according to claim 13, wherein a ratio of manganese to iron in the nanometer lithium iron manganese phosphate particle of the first positive electrode active material is greater than or equal to 3:7 and less than or equal to 7:3.

15. The battery pack according to claim 13, wherein the potential of the first positive electrode active material is greater than or equal to 3.5 V and less than or equal to 4.2 V, and the potential of the second positive electrode active material is greater than or equal to 3.6 V and less than or equal to 4.5 V.
